# EUROPEAN PATENT APPLICATION

(11) **EP 4 317 255 A1**
(43) Date of publication of application: **07.02.2024**
(21) Application number: 22780992.8
(22) Date of filing: 29.03.2022
(51) Int. Cl.: C08G 77/38, C08L 83/04, C09K 5/10, C08K 3/013

(54) **SIDE CHAIN-TYPE ALKYL-MODIFIED SILICONE RESIN**

(30) Priority: 31.03.2021 JP 2021062162
(71) Applicant: SEKISUI CHEMICAL CO., LTD., Osaka-shi Osaka 530-8565 (JP)
(72) Inventor: ISHIDA, Hiroya, Mishima-gun, Osaka 618-0021 (JP); KAYAL, Manish, Mishima-gun, Osaka 618-0021 (JP)
(74) Representative: Ter Meer Steinmeister & Partner
(86) International application number: PCT/JP2022/015685
(87) International publication number: WO 2022/210781

(57) **Abstract**

A side chain type alkyl-modified silicone resin of the present invention is represented by the following general formula (1). In general formula (1), R¹ is a hydrogen atom or an alkenyl group, R² is an alkyl group I having from 1 to 14 carbon atoms, R³ is an alkyl group II having from 15 to 18 carbon atoms, R⁵ and R⁶ are each independently a hydrogen atom or a methyl group, R⁴ is a methyl group or an ethyl group; w, x, y, and z represent the number of units of each structural unit; w, x, y, and z may each be 0; x and y are not 0 at the same time; and a percentage of the sum of x and y with respect to the sum of w, x, y, and z is from 80 to 100%. According to the present invention, a silicone resin can be provided that has high thermal conductivity while maintaining flexibility.

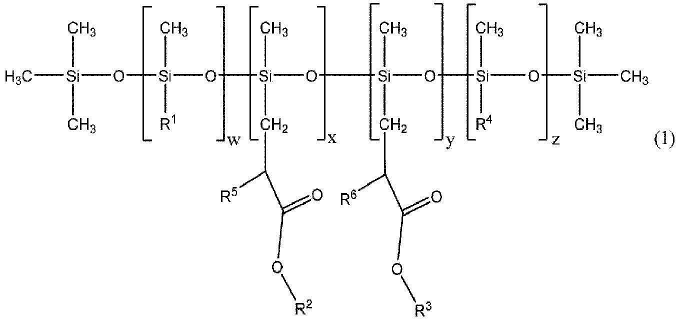

## Description

### Technical Field

The present invention relates to a side chain type alkyl-modified silicone resin and a resin composite material comprising the side chain type alkyl-modified silicone resin.

### Background Art

In electronic devices, countermeasures against heat have become important as a result of an increase in the amount of heat generated due to the increased density of circuit in recent years, and therefore demand for heat-dissipating materials is increasing. Heat-dissipating silicone grease is used to dissipate the heat generated by various electronic devices. This heat-dissipating silicone grease is generally a material containing a silicone resin (matrix resin) and a filler, and high thermal conduction properties and flexibility are required. Measures that can be taken to improve the thermal conduction properties of the heat-dissipating silicone grease include using a filler having a high thermal conductivity, increasing the filling rate of the filler, and improving the thermal conductivity of the matrix resin.

However, although boron nitride, aluminum nitride, diamond, and the like are known as fillers having a high thermal conductivity, these fillers have a low affinity and dispersibility in silicone resin, and their flexibility tends to deteriorate when the filling rate is increased. Further, if an attempt is made to increase the filling rate of the filler, the weight of the electronic device cannot be reduced because the specific gravity of the composite material such as the heat-dissipating silicone grease increases.

Meanwhile, reported examples of methods for improving the thermal conduction properties of the matrix resin, includes methods in which an alkyl group is introduced into the silicone chain (PTL1 to PTL5) and methods in which a liquid crystal site is introduced into the silicone chain (NPL1 1).

### Citation List

### Patent Literature

PTL1: JP 10-110179 A
PTL2: JP 11-049958 A
PTL3: JP 2005-154532 A
PTL4: JP 2007-277387 A
PTL5: JP 2009-209230 A

### Non Patent Literature

NPL 1: Ying Li, Chenggong Li, Liang Zhang, Wenying Zhou., Journal of Materials Science: Materials in Electronics, Published online: 18 March 2019 (https://doi.org/10.1007/s 10854-019-01150-1)

### Summary of Invention

### Technical Problem

However, PTL1 to PTL5 do not describe anything about the relationship among the type of alkyl group to be introduced into the silicone resin, the introduction rate of the alkyl group, and the thermal conductivity, and it is not clear how the thermal conductivity of the silicone resins is actually improved. Further, in NPL1, although crystallinity is improved by introducing a liquid crystal site into the silicone chain to improve thermal conductivity, because the resin becomes overly crosslinked, the resin becomes a solid, thereby losing flexibility.

Thus, there are almost no examples of specific methods for improving the thermal conductivity of the silicone resin itself, and solutions are scarce.

Accordingly, it is an object of the present invention to provide a silicone resin that has high thermal conductivity while maintaining flexibility.

### Solution to Problem

As a result of diligent research to achieve the above object, the present inventors discovered that the above problem can be solved by a side chain type alkyl-modified silicone resin represented by formula (1) in which an alkyl group is introduced via a chain derived from an alkyl group or a methacryl group, thereby completing the present invention.

That is, the present invention relates to the following [1] to [9].
[1] A side chain type alkyl-modified silicone resin represented by the following general formula (1): 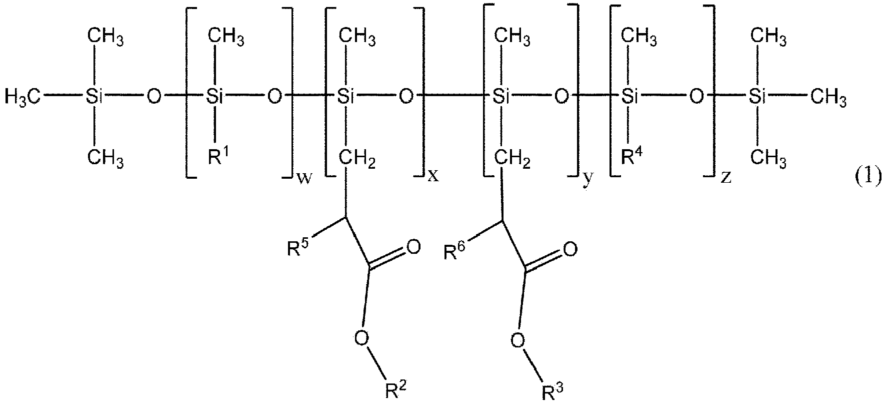 wherein R¹ is a hydrogen atom or an alkenyl group, R² is an alkyl group I having from 1 to 14 carbon atoms, R³ is an alkyl group II having from 15 to 18 carbon atoms, R⁵ and R⁶ are each independently a hydrogen atom or a methyl group, R⁴ is an ethyl group; w, x, y, and z represent the number of units of each structural unit; w, x, y, and z may each be 0; x and y are not 0 at the same time; and a percentage of the sum of x and y with respect to the sum of w, x, y, and z is from 80 to 100%.
[2] The side chain type alkyl-modified silicone resin according to the above [1], wherein in the formula (1), the percentage of x with respect to the sum of w, x, y, and z is from 20 to 80% and the percentage of y is from 15 to 75%.
[3] The side chain type alkyl-modified silicone resin according to the above [1] or [2], wherein R² and R³ are linear alkyl groups.
[4] The side chain type alkyl-modified silicone resin according to any one of the above [1] to [3], wherein the percentage of w with respect to the sum of w, x, y, and z in formula (1) is more than 0% and 20% or less.
[5] The side chain type alkyl-modified silicone resin according to any one of the above [1] to [3], wherein the percentage of w with respect to the sum of w, x, y, and z in formula (1) is 0%.
[6] The side chain type alkyl-modified silicone resin according to any one of the above [1] to [5], wherein the percentage of z with respect to the sum of w, x, y, and z in formula (1) is more than 0% and 20% or less.
[7] The side chain type alkyl-modified silicone resin according to any one of the above [1] to [5], wherein the percentage of z with respect to the sum of w, x, y, and z in formula (1) is 0%.
[8] The side chain type alkyl-modified silicone resin according to any one of the above [1] to [7], wherein the resin has a weight-average molecular weight of from 5,000 to 20,000.
[9] A resin composite material comprising the side chain type alkyl-modified silicone resin according to any one of the above [1] to [8] and an insulating thermally conductive filler.

### Advantageous Effects of Invention

According to the present invention, a silicone resin can be provided that has high thermal conductivity while maintaining flexibility.

### Description of Embodiment

### [Side chain type alkyl-modified silicone resin]

The side chain type alkyl-modified silicone resin of the present invention is represented by the following general formula (1).

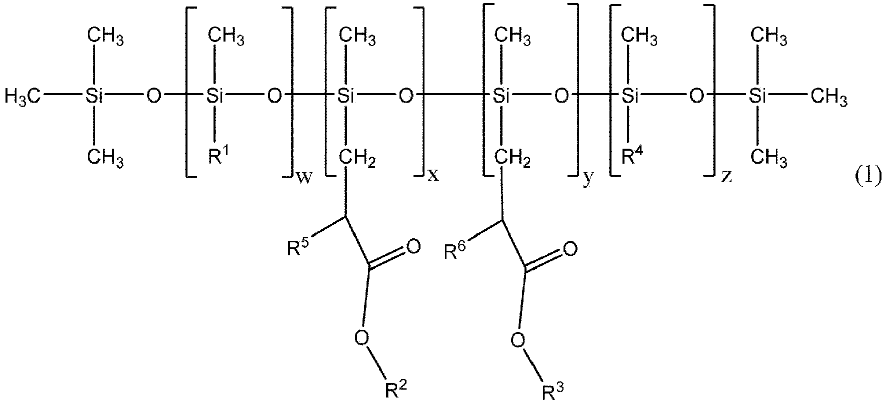

In the formula (1), R¹ is a hydrogen atom or an alkenyl group, R² is an alkyl group I having from 1 to 14 carbon atoms, R³ is an alkyl group II having from 15 to 18 carbon atoms, R⁵ and R⁶ are each independently a hydrogen atom or a methyl group, R⁴ is an ethyl group; w, x, y, and z represent the number of units of each structural unit; w, x, y, and z may each be 0; x and y are not 0 at the same time; and a percentage of the sum of x and y with respect to the sum of w, x, y, and z is from 80 to 100%.

In this specification, the structural unit in parentheses indicated by w may be described as "structural unit having R¹", the structural unit in parentheses indicated by x may be described as "structural unit having R²", the structural unit in parentheses indicated by y may be described as "structural unit having R³", and the structural unit in parentheses indicated by z may be described as "structural unit having R⁴".

Further, in this specification, the term "side chain type" means a type in which a chemical species is bound to the central portion of the polymer main chain molecule.

Since the side chain type alkyl-modified silicone resin of the present invention has the structure of general formula (1), it has high thermal conductivity while maintaining flexibility. Although the reason for the improvement in thermal conductivity is not clear, it is presumed to be as follows.

To improve the thermal conductivity of a resin, it is effective to increase phonon propagation in the polymer chain. An alkyl chain formed from a C-C-C bond has a wider bond angle and less strain than a silicone chain formed from a Si-O-Si bond, and so has better phonon propagation. Further, as shown in formula (1), because the alkyl group is introduced into a side chain of the silicone chain, the introduction rate of the alkyl group can be increased compared to introducing it into an end. In addition, the alkyl group is introduced via a chain derived from an acrylic or a methacrylic group. Since a chain derived from an acrylic group or a methacrylic group has an oxygen bond, grains tend to be formed between polymers by hydrogen bonds, which is thought to further improve thermal conductivity. In addition, it is believed that the alkyl group introduced into the side chain increases the radius of gyration of the polymer molecule and lengthens the molecular retention length, thereby improving thermal conductivity.

Thus, it is presumed that thermal conductivity is improved because many alkyl groups that can enhance phonon propagation are introduced via chains derived from an acrylic group or a methacryloyl group.

### <R¹>

In formula (1), R¹ is a hydrogen atom or an alkenyl group. The alkenyl group is preferably an alkenyl group having from 2 to 10 carbon atoms, such as a vinyl group, an allyl group, a propenyl group, a butenyl group, a pentenyl group, a hexenyl group, a heptenyl group, an octenyl group, a nonenyl group, and a decenyl group.

In formula (1), w represents the number of units of the structural unit having R¹, and is preferably from 0 to 10, and more preferably from 0 to 5.

Further, in formula (1), the percentage of w with respect to the sum of w, x, y, and z is preferably 0%, or more than 0% and 20% or less, and more preferably 0%, or more than 0%and 10% or less. When the percentage of w is within this range, aggregation of the side chain type alkyl-modified silicone resin can be suppressed, and flexibility can be satisfactorily maintained.

Since R¹ represents a hydrogen atom or alkenyl group bonded to a silicon atom, R¹ is a highly reactive site. Therefore, the side chain type alkyl-modified silicone resin of the present invention having R¹ can form a cured product by an addition reaction with an alkenyl group-containing organopolysiloxane or hydrogen organopolysiloxane.

In formula (1), R¹ may be absent (that is, w = 0). When R¹ is absent, the formation of aggregates can be effectively suppressed.

### <R²>

In formula (1), R² is an alkyl group I having from 1 to 14 carbon atoms. By introducing such a long-chain alkyl group I into a side chain, thermal conductivity can be increased. R² is preferably an alkyl group having from 6 to 12 carbon atoms, more preferably an alkyl group having from 8 to 12 carbon atoms, and further preferably an alkyl group having 12 carbon atoms.

In formula (1), x represents the number of units of the structural unit having R², and is preferably from 0 to 100, more preferably from 5 to 80, and further preferably from 10 to 60.

In formula (1), the percentage of x with respect to the sum of w, x, y, and z is from 0 to 100%, preferably from 60 to 100%, and more preferably from 80 to 100%.

When formula (1) has a structural unit having R³ described later, for example, when the percentage of y with respect to the sum of w, x, y, and z is from 15 to 75%, the percentage of x may be in a range from 20 to 80%, and even in such a case, thermal conductivity can be increased.

The alkyl group I represented by R² is preferably a linear alkyl group from the viewpoint of improving thermal conductivity. Examples of the linear alkyl group include a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, an n-dodecyl group, an n-tridecyl group, and an n-tetradecyl group.

A plurality of R² in formula (1) may each be the same or different, but are preferably the same from the viewpoint of ease of production.

### <R³>

In formula (1), R³ is an alkyl group II having from 15 to 18 carbon atoms. The side chain type alkyl-modified silicone resin of the present invention can have better thermal conductivity by introducing the alkyl group II.

R³ is preferably a long-chain alkyl group having from 16 to 18 carbon atoms, and more preferably a long-chain alkyl group having 18 carbon atoms.

In formula (1), y represents the number of units of the structural unit having R³, and is preferably from 0 to 100, more preferably from 10 to 70, and further preferably from 20 to 50.

In formula (1), the percentage of y with respect to the sum of w, x, y, and z is from 0 to 100%, preferably from 15 to 75%, and more preferably from 20 to 70%. By setting the percentage of y to be no less than these lower limits, the thermal conductivity of the side chain type alkyl-modified silicone resin tends to increase. Further, by setting the percentage of y to be no more than these upper limits, the side chain type alkyl-modified silicone resin tends to be a liquid at room temperature (23°C), and handleability is improved.

In formula (1), the percentage of the sum of x and y with respect to the sum of w, x, y, and z is from 80 to 100%. When the percentage of the sum of x and y is less than 80%, the number of alkyl groups in the side chain type alkyl-modified silicone resin is reduced, resulting in a decrease in thermal conductivity. The percentage of the sum of x and y is preferably from 85 to 100%, more preferably from 90 to 100%, and further preferably from 95 to 100%.

In formula (1), x and y may each be 0, but x and y are not 0 at the same time, and it is preferable that x and y are both not 0. That is, it is preferable to introduce both the alkyl group I and the alkyl group II, which tends to improve thermal conductivity more.

The alkyl group II represented by R³ is preferably a linear alkyl group from the viewpoint of improving thermal conductivity. Examples of the linear alkyl groups include an n-pentadecyl group, an n-hexadecyl group, an n-heptadecyl group, and an n-octadecyl group.

A plurality of R³ in formula (1) may each be the same or different, but are preferably the same from the viewpoint of ease of production.

### <R⁵ and R⁶>

R⁵ and R⁶ are each independently a hydrogen atom or a methyl group, and among them, from the viewpoint of improving thermal conductivity, it is preferable that both R⁵ and R⁶ are methyl groups.

### <R⁴>

In formula (1), R⁴ is an ethyl group. In formula (1), z represents the number of units of the structural unit having R⁴, and is preferably from 0 to 10, and more preferably from 0 to 5.

In formula (1), the percentage of z with respect to the sum of w, x, y, and z is preferably 0%, or more than 0% and 20% or less, and more preferably 0%, or more than 0% and 10% or less.

Introducing R⁴ when producing the side chain type alkyl-modified silicone resin of the present invention makes it easier to adjust the amount of R¹. In the production process of the side chain type alkyl-modified silicone resin, if the amount of R¹ is appropriately adjusted, it may not be necessary to introduce R⁴ (that is, z may be 0).

In the side chain type alkyl-modified silicone resin of the present invention, the arrangement of the structural units in the molecular chain is not limited as long as the percentages of the structural unit having R¹, the structural unit having R², the structural unit having R³, and the structural unit having R⁴ are as described above. That is, the various structural units may be present in the molecule in a block-like manner or in a random manner.

### <Molecular weight>

Although the weight-average molecular weight of the side chain type alkyl-modified silicone resin of the present invention is not particularly limited, it is preferably from 5,000 to 20,000, and more preferably from 7,000 to 18,000. When the weight-average molecular weight is within such a range, the viscosity can be adjusted appropriately and the flexibility can be easily maintained. The weight-average molecular weight is a value determined in terms of polystyrene by gel permeation chromatography (GPC) measurement.

### [Method for producing side chain type alkyl-modified silicone resin]

The method for producing the side chain type alkyl-modified silicone resin of the present invention is not particularly limited. For example, the method may include a step of reacting an organopolysiloxane compound having a hydrosilyl group represented by the following formula (2) with at least one selected from alkyl (meth)acrylate I represented by the following formula (3) and an alkyl (meth)acrylate II represented by the following formula (4) in the presence of a platinum catalyst.

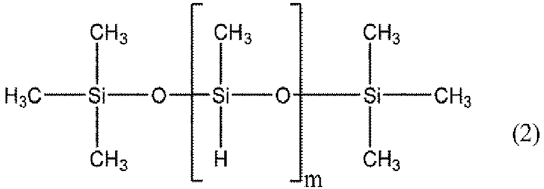

In the formula (2), m is from 10 to 200, preferably from 10 to 120, and more preferably from 15 to 80.

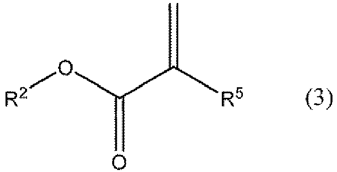

In the formula (3), R² and R⁵ have the same definitions as in formula (1).

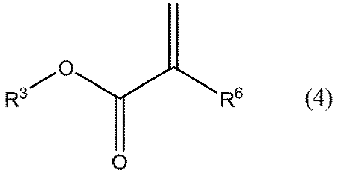

In the formula (4), R³ and R⁶ have the same definitions as in formula (1).

By providing such a step, a part or all of the hydrosilyl groups (SiH) of formula (2) can react with at least any one of alkyl (meth)acrylate I and alkyl (meth)acrylate II to form the structural unit having R² and the structural unit having R³ in formula (1). At this time, the amount of R² and R³ introduced can be adjusted to a desired amount by adjusting the blending amount of the alkyl (meth)acrylate I and the alkyl (meth)acrylate II.

In this step, the reaction temperature and the reaction time may be adjusted as appropriate. For example, the reaction temperature is preferably from 40 to 120°C, and the reaction time is preferably from 1 to 24 hours.

The reaction may be performed in the presence of a solvent. The type of solvent is not particularly limited, and may be adjusted as appropriate according to the type of the hydrocarbon having an unsaturated double bond. However, from the viewpoint of the solubility of the synthesized product, reaction temperature, and the like, toluene is preferable.

After the reaction, ethylene, methyl methacrylate, ethyl methacrylate, methyl acrylate, or ethyl acrylate may optionally be added and reacted in order to reduce the number of remaining hydrosilyl groups in formula (2). When ethylene is added and reacted, the structural unit having R⁴ in formula (1) is formed. When methyl methacrylate, ethyl methacrylate, methyl acrylate, or ethyl acrylate is added and reacted, the structural unit having R² in formula (1) is formed.

A side chain type alkyl-modified silicone resin represented by formula (1) can be obtained in the manner described above. When R¹ is an alkenyl group, it is suitable to add a hydrocarbon having two unsaturated double bonds, preferably a hydrocarbon with from 4 to 18 carbon atoms having an unsaturated double bond at both ends, to react with the hydrosilyl groups.

### [Resin composite material]

The resin composite material of the present invention contains the side chain type alkyl-modified silicone resin represented by the above general formula (1) and an insulating thermally conductive filler. In the resin composite material, the side chain type alkyl-modified resin serves as a matrix resin, and the insulating thermally conductive filler is dispersed in the matrix resin.

As described above, since the side chain type alkyl-modified silicone resin of the present invention has excellent thermal conduction properties, using it in combination with an insulating thermally conductive filler can improve thermal conductivity even more effectively.

The content of the side chain type alkyl-modified silicone resin in the resin composite material is not particularly limited, and may be adjusted appropriately while considering the dispersibility and thermal conduction properties of the insulating thermally conductive filler, but it is preferably from 10 to 97% by mass, and more preferably from 50 to 95% by mass.

### <Insulating thermally conductive filler>

The resin composite material of the present invention contains an insulating thermally conductive filler. By containing an insulating thermally conductive filler, the insulating properties and thermal conduction properties of the resin composite material can be improved.

The average particle size of the insulating thermally conductive filler is not particularly limited, but it is preferably 0.1 µm or more and 250 µm or less, and more preferably 0.2 µm or more and 100 µm or less.

The average particle size can be measured, for example, by a laser diffraction method, and the particle size (d50) when the cumulative volume is 50% may be taken as the average particle size.

The insulating thermally conductive filler has, for example, insulating properties having a volume resistivity of preferably 1.0 × 10¹⁰·Ω·cm or more at 20°C, and thermal conduction properties having a thermal conductivity of preferably 10 W/m.K or more.

The volume resistivity can be measured according to JIS C2141.

The thermal conductivity can be measured, for example, by a periodic heating thermoreflectance method using a thermal microscope manufactured by Bethel Co., Ltd., on a filler cross section cut with a cross section polisher.

The content of the insulating thermally conductive filler is not particularly limited, but it is preferably from 10 to 97 parts by mass, and more preferably from 50 to 95 parts by mass, based on 100 parts by mass of the side chain type alkyl-modified silicone resin. When the content of the insulating thermally conductive filler is not less than these lower limits, the thermal conduction properties of the resin composite material can be increased. On the other hand, when the content of the insulating thermally conductive filler is not more than these upper limits, it is possible to prevent the resin composite material from becoming unnecessarily hard and difficult to handle.

Examples of types of insulating thermally conductive fillers include, but are not limited to, aluminum oxide, magnesium oxide, boron nitride, boron nitride nanotubes, aluminum nitride, and diamond.

The insulating thermally conductive filler may be used as a single type or as a combination of two types or more.

### <Other components>

The resin composite material may optionally contain a silicone resin other than the side chain type alkyl-modified silicone resin represented by the general formula (1) within a range that does not impair the effects of the present invention.

Examples of the other silicone resin include a silicone resin having a reactive group such as an alkenyl group, a hydrosilyl group, or an alkoxy group, and a silicone resin that does not have a reactive group.

When another silicone resin is contained, the content thereof is preferably 50% by mass or less, more preferably 30% by mass or less, and further preferably 10% by mass or less, based on the resin composite material.

Further, the resin composite material of the present invention may optionally contain additives such as a dispersant, an antioxidant, a heat stabilizer, a colorant, a fire retardant, and an antistatic agent.

Applications that the resin composite material of the present invention can be used for are not particularly limited, and the resin composite material can be used for various heat dissipation applications as a heat-dissipating silicone grease. For example, the resin composite material can be placed between an electronic component such as a semiconductor element and a heat sink to effectively dissipate heat generated from the electronic component.

### Examples

The present invention will now be clarified by providing specific examples and comparative examples of the present invention. However, the present invention is not limited to the following examples.

The methods for evaluating each of the compounds (silicone resins) of the examples and comparative examples is as follows.

### [Thermal conductivity]

The thermal conductivity of the compound of each example and comparative example was measured using a TCi manufactured by C-Therm Technologies Ltd., and evaluated based on the following evaluation criteria.

### (Evaluation)

| | |
|---|---|
| AA: | 0.165 W/mK or more |
| A: | 0.160 W/mK or more and less than 0.165 W/mK |
| B: | 0.150 W/mK or more and less than 0.160 W/mK |
| C: | less than 0.150 W/mK |

### [Initial shape]

The compounds (silicone resin) of each example and comparative example were evaluated as being an "A" if the compound was a liquid at room temperature (23°C) and as a "B" if they were a solid

### [Solubility in silicone]

The solubility of the compound of each example and comparative example was ascertained by mixing 3 g of the compound and 7 g of silicone at 25°C. As the silicone, dimethyl silicone oil ("KF-96-100cst" manufactured by Shin-Etsu Chemical Co., Ltd.) was used.

Compounds that dissolved were evaluated as an "A" and compounds that did not dissolve were evaluated as a "C".

### [Change over time (gelation)]

The presence/absence of gelation of the compound (silicone resin) of each example and comparative example after 24 hours at 120°C and 85% humidity was ascertained.

### (Evaluation)

| | |
|---|---|
| A | Gelation was not ascertained. |
| C | Gelation was ascertained. |

The side chain type alkyl-modified silicone resin used in each example and comparative example was prepared as Compounds 1 to 21 and Comparative Compounds 1 to 10 shown below.

### (Compound 1)

Compound 1 was produced as follows.

5 g of an organopolysiloxane compound (m = 56) having a hydrosilyl group represented by formula (2) and 7.5 g of the alkyl methacrylate (R² is a methyl group and R⁵ is a methyl group) of formula (3) were reacted at 90°C for 12 hours in dry toluene, a nitrogen atmosphere, and in the presence of a platinum catalyst. After the reaction, the solvent was removed by an evaporator and a vacuum dryer to obtain Compound 1.

From analysis of Compound 1 by Si-NMR, it was confirmed that a side chain type alkyl-modified silicone resin having the structure shown in Table 1 was produced. Each of the Compounds described later was also identified by the same method.

### (Compound 2)

Compound 2 was produced as follows.

5 g of an organopolysiloxane compound (m = 24) having a hydrosilyl group represented by formula (2) and 12.2 g of the alkyl methacrylate (R² is an n-hexyl group and R⁵ is a methyl group) of formula (3) were reacted at 90°C for 12 hours in dry toluene, a nitrogen atmosphere, and in the presence of a platinum catalyst. After the reaction, the solvent was removed by an evaporator and a vacuum dryer to obtain Compound 2.

Compound 2 was a side chain type alkyl-modified silicone resin having the structure shown in Table 1.

### (Compound 3)

Compound 3 was produced as follows.

5 g of an organopolysiloxane compound (m = 35) having a hydrosilyl group represented by formula (2) and 12.49 g of the alkyl methacrylate (R² is an n-hexyl group and R⁵ is a methyl group) of formula (3) were reacted at 90°C for 12 hours in dry toluene, a nitrogen atmosphere, and in the presence of a platinum catalyst. After the reaction, the solvent was removed by an evaporator and a vacuum dryer to obtain Compound 3.

Compound 3 was a side chain type alkyl-modified silicone resin having the structure shown in Table 1.

### (Compound 4)

Compound 4 was produced as follows.

5 g of an organopolysiloxane compound (m = 56) having a hydrosilyl group represented by formula (2) and 12.81 g of the alkyl methacrylate (R² is an n-hexyl group and R⁵ is a methyl group) of formula (3) were reacted at 90°C for 12 hours in dry toluene, a nitrogen atmosphere, and in the presence of a platinum catalyst. After the reaction, the solvent was removed by an evaporator and a vacuum dryer to obtain Compound 4.

Compound 4 was a side chain type alkyl-modified silicone resin having the structure shown in Table 1.

### (Compound 5)

Compound 5 was produced as follows.

5 g of an organopolysiloxane compound (m = 56) having a hydrosilyl group of formula (2) and 14.9 g of the alkyl methacrylate (R² is a branched alkyl group having 8 carbon atoms and R⁵ is a methyl group) of formula (3) were reacted at 90°C for 12 hours in dry toluene, a nitrogen atmosphere, and in the presence of a platinum catalyst. After the reaction, the solvent was removed by an evaporator and a vacuum dryer to obtain Compound 5. Compound 5 was a side chain type alkyl-modified silicone resin having the structure shown in Table 1.

### (Compound 6)

Compound 6 was produced as follows.

5 g of an organopolysiloxane compound (m = 56) having a hydrosilyl group represented by formula (2) and 14.9 g of the alkyl methacrylate (R² is an n-octyl group and R⁵ is a methyl group) of formula (3) were reacted at 90°C for 12 hours in dry toluene, a nitrogen atmosphere, and in the presence of a platinum catalyst. After the reaction, the solvent was removed by an evaporator and a vacuum dryer to obtain Compound 6.

Compound 6 was a side chain type alkyl-modified silicone resin having the structure shown in Table 1.

### (Compound 7)

Compound 7 was produced as follows.

5 g of an organopolysiloxane compound (m = 56) having a hydrosilyl group represented by formula (2) and 8.59 g of the alkyl methacrylate (R² is an ethyl group and R⁵ is a methyl group) of formula (3) were reacted at 90°C for 12 hours in dry toluene, a nitrogen atmosphere, and in the presence of a platinum catalyst. After the reaction, the solvent was removed by an evaporator and a vacuum dryer to obtain Compound 7. Compound 7 was a side chain type alkyl-modified silicone resin having the structure shown in Table 1.

### (Compound 8)

Compound 8 was produced as follows.

5 g of an organopolysiloxane compound (m = 56) having a hydrosilyl group represented by formula (2) and 10.7 g of the alkyl methacrylate (R² is an n-butyl group and R⁵ is a methyl group) of formula (3) were reacted at 90°C for 12 hours in dry toluene, a nitrogen atmosphere, and in the presence of a platinum catalyst. After the reaction, the solvent was removed by an evaporator and a vacuum dryer to obtain Compound 8. Compound 8 was a side chain type alkyl-modified silicone resin having the structure shown in Table 1.

### (Compound 9)

Compound 9 was produced as follows.

5 g of an organopolysiloxane compound (m = 56) having a hydrosilyl group represented by formula (2) and 12.81 g of the alkyl methacrylate (R² is an n-hexyl group and R⁵ is a methyl group) of formula (3) were reacted at 90°C in the presence of a platinum catalyst to obtain Compound 9. Compound 9 was a side chain type alkyl-modified silicone resin having the structure shown in Table 1.

### (Compound 10)

Compound 10 was produced as follows.

5 g of an organopolysiloxane compound (m = 56) having a hydrosilyl group represented by formula (2) and 14.92 g of the alkyl methacrylate (R² is an n-octyl group and R⁵ is a methyl group) of formula (3) were reacted at 90°C for 12 hours in dry toluene, a nitrogen atmosphere, and in the presence of a platinum catalyst. After the reaction, the solvent was removed by an evaporator and a vacuum dryer to obtain Compound 10. Compound 10 was a side chain type alkyl-modified silicone resin having the structure shown in Table 1.

### (Compound 11)

Compound 11 was produced as follows.

5 g of an organopolysiloxane compound (m = 56) having a hydrosilyl group represented by formula (2) and 19.14 g of the alkyl methacrylate (R² is an n-dodecyl group and R⁵ is a methyl group) of formula (3) were reacted at 90°C for 12 hours in dry toluene, a nitrogen atmosphere, and in the presence of a platinum catalyst. After the reaction, the solvent was removed by an evaporator and a vacuum dryer to obtain Compound 11. Compound 11 was a side chain type alkyl-modified silicone resin having the structure shown in Table 1.

### (Compound 12)

Compound 12 was produced as follows.

5 g of an organopolysiloxane compound (m = 56) having a hydrosilyl group of formula (2) and 25.48 g of the alkyl methacrylate (R³ is an n-octadecyl group and R⁶ is a methyl group) of formula (4) were reacted at 90°C for 12 hours in dry toluene, a nitrogen atmosphere, and in the presence of a platinum catalyst. After the reaction, the solvent was removed by an evaporator and a vacuum dryer to obtain Compound 12. Compound 12 was a side chain type alkyl-modified silicone resin having the structure shown in Table 1.

### (Compound 13)

Compound 13 was produced as follows.

5 g of an organopolysiloxane compound (m = 56) having a hydrosilyl group represented by formula (2) and 12.81 g of the alkyl methacrylate (R² is an n-hexyl group and R⁵ is a methyl group) of formula (3) were reacted at 90°C for 12 hours in dry toluene, a nitrogen atmosphere, and in the presence of a platinum catalyst. After the reaction, the solvent was removed by an evaporator and a vacuum dryer to obtain Compound 13. Compound 13 was a side chain type alkyl-modified silicone resin having the structure shown in Table 1.

### (Compound 14)

Compound 14 was produced as follows.

5 g of an organopolysiloxane compound (m = 56) having a hydrosilyl group represented by formula (2) and 19.14 g of the alkyl methacrylate (R² is an n-dodecyl group and R⁵ is a methyl group) of formula (3) were reacted at 90°C for 12 hours in dry toluene, a nitrogen atmosphere, and in the presence of a platinum catalyst. After the reaction, the solvent was removed by an evaporator and a vacuum dryer to obtain Compound 14. Compound 14 was a side chain type alkyl-modified silicone resin having the structure shown in Table 1.

### (Compound 15)

Compound 15 was produced as follows. 2 g of an organopolysiloxane compound (m = 56) of formula (2), 5 g of the alkyl methacrylate (R² is an n-hexyl group and R⁵ is a methyl group) of formula (3), and 0.4 g of the alkyl methacrylate (R³ is an n-octadecyl group and R⁶ is a methyl group) of formula (4) were reacted at 90°C for 12 hours in dry toluene, a nitrogen atmosphere, and in the presence of a platinum catalyst. After the reaction, the solvent was removed by an evaporator and a vacuum dryer to obtain Compound 15. Compound 15 was a side chain type alkyl-modified silicone resin having the structure shown in Table 1.

### (Compound 16)

Compound 16 was produced as follows.

2 g of an organopolysiloxane compound (m = 56) of formula (2), 4.74 g of the alkyl methacrylate (R² is an n-hexyl group and R⁵ is a methyl group) of formula (3), and 0.96 g of the alkyl methacrylate (R³ is an n-octadecyl group and R⁶ is a methyl group) of formula (4) were reacted at 90°C for 12 hours in dry toluene, a nitrogen atmosphere, and in the presence of a platinum catalyst. After the reaction, the solvent was removed by an evaporator and a vacuum dryer to obtain Compound 16. Compound 16 was a side chain type alkyl-modified silicone resin having the structure shown in Table 1.

### (Compound 17)

Compound 17 was produced as follows.

2 g of an organopolysiloxane compound (m = 56) of formula (2), 4.35 g of the alkyl methacrylate (R² is an n-hexyl group and R⁵ is a methyl group) of formula (3), and 1.73 g of the alkyl methacrylate (R³ is an n-octadecyl group and R⁶ is a methyl group) of formula (4) were reacted at 90°C for 12 hours in dry toluene, a nitrogen atmosphere, and in the presence of a platinum catalyst. After the reaction, the solvent was removed by an evaporator and a vacuum dryer to obtain Compound 17. Compound 17 was a side chain type alkyl-modified silicone resin having the structure shown in Table 1.

### (Compound 18)

Compound 18 was produced as follows.

2 g of an organopolysiloxane compound (m = 56) of formula (2), 6.21 g of the alkyl methacrylate (R² is an n-dodecyl group and R⁵ is a methyl group) of formula (3), and 2.11 g of the alkyl methacrylate (R³ is an n-octadecyl group and R⁶ is a methyl group) of formula (4) were reacted at 90°C for 12 hours in dry toluene, a nitrogen atmosphere, and in the presence of a platinum catalyst. After the reaction, the solvent was removed by an evaporator and a vacuum dryer to obtain Compound 18. Compound 18 was a side chain type alkyl-modified silicone resin having the structure shown in Table 1.

### (Compound 19)

Compound 19 was produced as follows.

2 g of an organopolysiloxane compound (m = 56) of formula (2), 3.9 g of the alkyl methacrylate (R² is an n-dodecyl group and R⁵ is a methyl group) of formula (3), and 5.38 g of the alkyl methacrylate (R³ is an n-octadecyl group and R⁶ is a methyl group) of formula (4) were reacted at 90°C for 12 hours in dry toluene, a nitrogen atmosphere, and in the presence of a platinum catalyst. After the reaction, the solvent was removed by an evaporator and a vacuum dryer to obtain Compound 19. Compound 19 was a side chain type alkyl-modified silicone resin having the structure shown in Table 1.

Compound 20 was produced as follows.

2 g of an organopolysiloxane compound (m = 56) of formula (2), 2.17 g of the alkyl methacrylate (R² is an n-docecyl group and R⁵ is a methyl group) of formula (3), and 7.69 g of the alkyl methacrylate (R³ is an n-octadecyl group and R⁶ is a methyl group) of formula (4) were reacted at 90°C for 12 hours in dry toluene, a nitrogen atmosphere, and in the presence of a platinum catalyst. After the reaction, the solvent was removed by an evaporator and a vacuum dryer to obtain Compound 20. Compound 20 was a side chain type alkyl-modified silicone resin having the structure shown in Table 1.

Compound 21 was produced as follows.

5 g of an organopolysiloxane compound (m = 56) having a hydrosilyl group represented by formula (2) and 13 g of the alkyl methacrylate (R² is an n-octyl group and R⁵ is a methyl group) of formula (3) were reacted at 90°C for 12 hours in dry toluene, a nitrogen atmosphere, and in the presence of a platinum catalyst. After the reaction, the solvent was removed by an evaporator and a vacuum dryer to obtain Compound 21. Compound 21 was a side chain type alkyl-modified silicone resin having the structure shown in Table 1.

### (Comparative Compound 1)

As Comparative Compound 1, commercial product 1 ("KF-96-50cst" manufactured by Shin-Etsu Chemical Co., Ltd.) having the following structure was used.

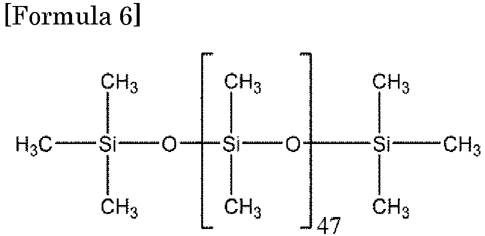

### (Comparative Compound 2)

As Comparative Compound 2, commercial product 2 ("KF-96-200cst" manufactured by Shin-Etsu Chemical Co., Ltd.) having the following structure was used.

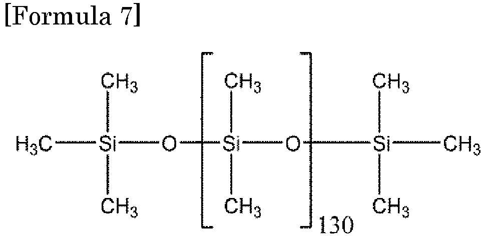

### (Comparative Compound 3)

As Comparative Compound 3, commercial product 3 ("KF-96-1000cst" manufactured by Shin-Etsu Chemical Co., Ltd.) having the following structure was used.

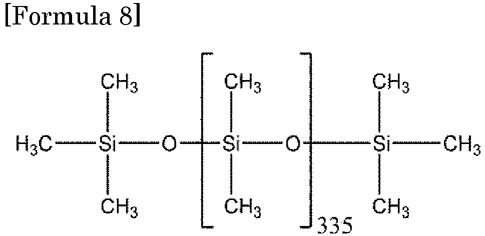

### (Comparative Compound 4)

As Comparative Compound 4, commercial product 4 ("KF-96H-6000cst" manufactured by Shin-Etsu Chemical Co., Ltd.) having the following structure was used.

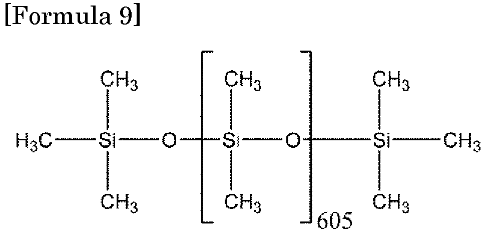

### (Comparative Compound 5)

Comparative Compound 5 was an organopolysiloxane compound (m = 24) having a hydrosilyl group represented by formula (2).

### (Comparative Compound 6)

Comparative Compound 6 was an organopolysiloxane compound (m = 56) having a hydrosilyl group represented by formula (2).

### (Comparative Compound 7)

Comparative Compound 7 was produced as follows.

5 g of an organopolysiloxane compound (m = 56) having a hydrosilyl group represented by formula (2) and 2.42 g of the alkyl methacrylate (R² is an n-hexyl group and R⁵ is a methyl group) of formula (3) were reacted at 90°C in the presence of a platinum catalyst to obtain Comparative Compound 7. Comparative Compound 7 was a side chain type alkyl-modified silicone resin having the structure shown in Table 2.

### (Comparative Compound 8)

Comparative Compound 8 was produced as follows.

5 g of an organopolysiloxane compound (m = 56) having a hydrosilyl group represented by formula (2) and 5.06 g of the alkyl methacrylate (R² is an n-dodecyl group and R⁵ is a methyl group) of formula (3) were reacted at 90°C in the presence of a platinum catalyst to obtain Comparative Compound 8. Comparative Compound 8 was a side chain type alkyl-modified silicone resin having the structure shown in Table 2.

### (Comparative Compound 9)

Comparative Compound 9 was produced as follows.

5 g of an organopolysiloxane compound (m = 56) having a hydrosilyl group represented by formula (2) and 9.03 g of the alkyl methacrylate (R² is an n-dodecyl group and R⁵ is a methyl group) of formula (3) were reacted at 90°C in the presence of a platinum catalyst to obtain Comparative Compound 9. Comparative Compound 9 was a side chain type alkyl-modified silicone resin having the structure shown in Table 2.

### (Comparative Compound 10)

Comparative Compound 10 was produced as follows.

5 g of an organopolysiloxane compound (m = 56) having a hydrosilyl group represented by formula (2) and 5.4 g of the alkyl methacrylate (R² is an n-docdecyl group and R⁵ is a methyl group) of formula (3) were reacted at 90°C in the presence of a platinum catalyst. Then, 10.2 g of the alkyl methacrylate (R³ has 30 carbon atoms and R⁶ is a methyl group) of formula (3) was reacted at 120°C in the presence of a platinum catalyst to obtain Comparative Compound 10. Comparative Compound 10 was a side chain type alkyl-modified silicone resin having the structure shown in Table 2.

### [Example 1]

Using Compound 1, which is a side chain type alkyl-modified silicone resin of the present invention produced as described above, as a sample, thermal conductivity, initial shape, solubility in silicone, and change over time (gelation) were evaluated. The results are shown in Table 3.

### [Examples 2 to 21, Comparative Examples 1 to 10]

Each evaluation was performed in the same manner as in Example 1, except that each of the compounds listed in Table 3 was used instead of Compound 1. The results are shown in Table 3.

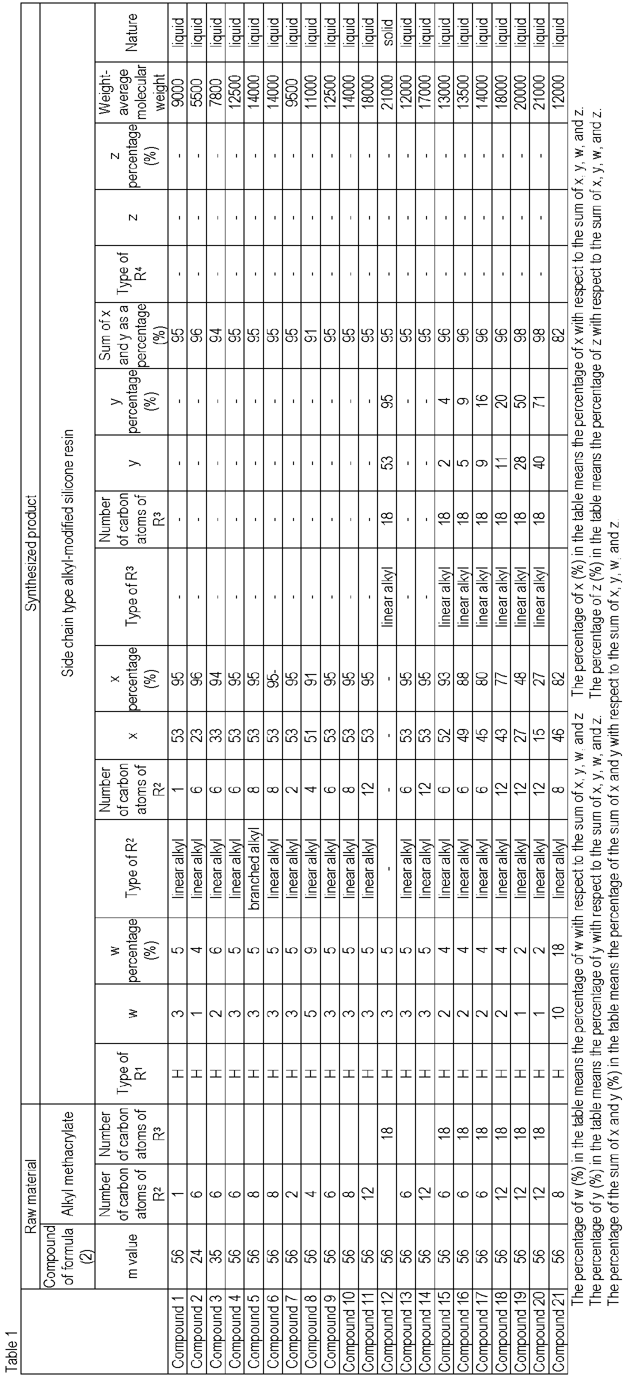

**Table 2**

| | Raw material | | | Synthesized product | | | | | | | | | | | | | | | | |
|---|---|---|---|---|---|---|---|---|---|---|---|---|---|---|---|---|---|---|---|---|
| | Compound of formula (2) | Alkyl methacrylate | | Side chain type alkyl-modified silicone resin | | | | | | | | | | | | | | | | |
| | m value | Number of carbon atoms of R² | Number of carbon atoms of R³ | Type of R¹ | w | w percentage (%) | Type of R² | Number of carbon atoms of R² | x | x percentage (%) | Type of R³ | Number of carbon atoms of R³ | y | y percentage (%) | Sum of x and y as a percentage (%) | Type of R⁴ | z | z percentage (%) | Weight-average molecular weight | Nature |
| Comparative Compound 1 | Commercial product 1 | | | | | | | | | | | | | | | | | | 3600 | liquid |
| Comparative Compound 2 | Commercial product 2 | | | | | | | | | | | | | | | | | | 9800 | liquid |
| Comparative Compound 3 | Commercial product 3 | | | | | | | | | | | | | | | | | | 25000 | liquid |
| Comparative Compound 4 | Commercial product 4 | | | | | | | | | | | | | | | | | | 45000 | liquid |
| Comparative Compound 5 | 24 | - | - | H | 24 | 100 | - | - | - | - | - | - | - | - | 0 | - | - | - | 1600 | liquid |
| Comparative Compound 6 | 56 | - | - | H | 56 | 100 | - | - | - | - | - | - | - | - | 0 | - | - | - | 3500 | liquid |
| Comparative Compound 7 | 56 | 6 | - | H | 46 | 82 | linear alkyl | 6 | 10 | 18 | - | - | - | - | 18 | - | - | - | 11000 | liquid |
| Comparative Compound 8 | 56 | 12 | - | H | 42 | 75 | linear alkyl | 12 | 14 | 25 | - | - | - | - | 25 | - | - | - | 12500 | liquid |
| Comparative Compound 9 | 56 | 12 | - | H | 31 | 55 | linear alkyl | 12 | 25 | 45 | - | - | - | - | 45 | - | - | - | 14000 | liquid |
| Comparative Compound 10 | 56 | 12 | 30 | H | 31 | 55 | linear alkyl | 12 | 15 | 27 | linear alkyl | 30 | 10 | 18 | 45 | | | | 22000 | solid |

| | | | | | | | | | | | | | | | | | | | | |
|---|---|---|---|---|---|---|---|---|---|---|---|---|---|---|---|---|---|---|---|---|
| The percentage of w (%) in the table means the percentage of w with respect to the sum of x, y, w, and z The percentage of x (%) in the table means the percentage of x with respect to the sum of x, y, w, and z. The percentage of y (%) in the table means the percentage of y with respect to the sum of x, y, w, and z. The percentage of z (%) in the table means the percentage of z with respect to the sum of x, y, w, and z. The percentage of the sum of x and y (%) in the table means the percentage of the sum of x and y with respect to the sum of x, y, w, and z. | | | | | | | | | | | | | | | | | | | | |

**Table 3**

| | Side chain type alkyl-modified silicone resin | Thermal conductivity (W/mK) | Evaluation of thermal conductivity | Initial shape | Solubility in silicone | Change over time (gelation) |
|---|---|---|---|---|---|---|
| Example 1 | Compound 1 | 0.158 | B | A | A | A |
| Example 2 | Compound 2 | 0.158 | B | A | A | A |
| Example 3 | Compound 3 | 0.158 | B | A | A | A |
| Example 4 | Compound 4 | 0.156 | B | A | A | A |
| Example 5 | Compound 5 | 0.153 | B | A | A | A |
| Example 6 | Compound 6 | 0.159 | B | A | A | A |
| Example 7 | Compound 7 | 0.158 | B | A | A | A |
| Example 8 | Compound 8 | 0.156 | B | A | A | A |
| Example 9 | Compound 9 | 0.156 | B | A | A | A |
| Example 10 | Compound 10 | 0.159 | B | A | A | A |
| Example 11 | Compound 11 | 0.163 | A | A | A | A |
| Example 12 | Compound 12 | 0.492 | AA | B | A | A |
| Example 13 | Compound 13 | 0.156 | B | A | A | A |
| Example 14 | Compound 14 | 0.163 | A | A | A | A |
| Example 15 | Compound 15 | 0.159 | B | A | A | A |
| Example 16 | Compound 16 | 0.159 | B | A | A | A |
| Example 17 | Compound 17 | 0.160 | A | A | A | A |
| Example 18 | Compound 18 | 0.163 | A | A | A | A |
| Example 19 | Compound 19 | 0.166 | AA | A | A | A |
| Example 20 | Compound 20 | 0.167 | AA | A | A | A |
| Example 21 | Compound 21 | 0.158 | B | A | A | A |
| Comparative Example 1 | Comparative Compound 1 | 0.145 | C | A | A | A |
| Comparative Example 2 | Comparative Compound 2 | 0.147 | C | A | A | A |
| Comparative Example 3 | Comparative Compound 3 | 0.148 | C | A | A | A |
| Comparative Example 4 | Comparative Compound 4 | 0.149 | C | A | A | A |
| Comparative Example 5 | Comparative Compound 5 | 0.132 | C | A | A | C |
| Comparative Example 6 | Comparative Compound 6 | 0.134 | C | A | A | C |
| Comparative Example 7 | Comparative Compound 7 | 0.140 | C | A | A | C |
| Comparative Example 8 | Comparative Compound 8 | 0.150 | B | A | A | C |
| Comparative Example 9 | Comparative Compound 9 | 0.159 | B | A | A | C |
| Comparative Example 10 | Comparative Compound 10 | 0.2 | AA | B | C | C |

The compounds (side chain type alkyl-modified silicone resin) of each examples satisfying the requirements of the present invention had high thermal conductivity, good solubility in silicone, and good results for change over time, and thus has excellent flexibility.

On the other hand, the compounds of each of the comparative examples had lower thermal conductivity than the compounds of the examples, or had worse results for change over time, making it difficult to achieve both high thermal conductivity and flexibility.

## Claims

1. A side chain type alkyl-modified silicone resin represented by the following general formula (1): 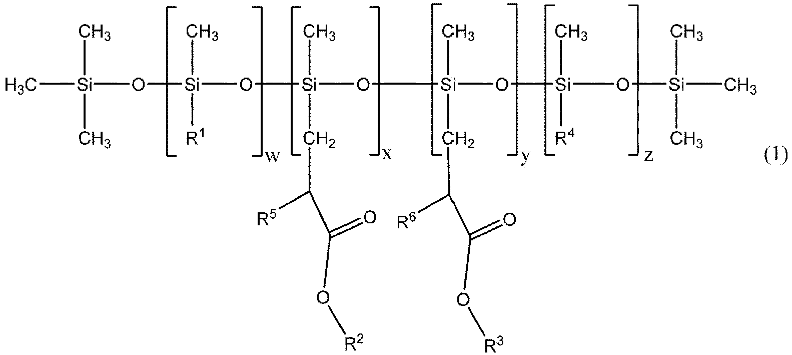 wherein R¹ is a hydrogen atom or an alkenyl group, R² is an alkyl group I having from 1 to 14 carbon atoms, R³ is an alkyl group II having from 15 to 18 carbon atoms, R⁵ and R⁶ are each independently a hydrogen atom or a methyl group, R⁴ is an ethyl group; w, x, y, and z represent the number of units of each structural unit; w, x, y, and z may each be 0; x and y are not 0 at the same time; and a percentage of the sum of x and y with respect to the sum of w, x, y, and z is from 80 to 100%.

2. The side chain type alkyl-modified silicone resin according to claim 1, wherein in the formula (1), the percentage of x with respect to the sum of w, x, y, and z is from 20 to 80% and the percentage of y is from 15 to 75%.

3. The side chain type alkyl-modified silicone resin according to claim 1 or 2, wherein R² and R³ are linear alkyl groups.

4. The side chain type alkyl-modified silicone resin according to any one of claims 1 to 3, wherein the percentage of w with respect to the sum of w, x, y, and z in formula (1) is more than 0% and 20% or less.

5. The side chain type alkyl-modified silicone resin according to any one of claims 1 to 3, wherein the percentage of w with respect to the sum of w, x, y, and z in formula (1) is 0%.

6. The side chain type alkyl-modified silicone resin according to any one of claims 1 to 5, wherein the percentage of z with respect to the sum of w, x, y, and z in formula (1) is more than 0% and 20% or less.

7. The side chain type alkyl-modified silicone resin according to any one of claims 1 to 5, wherein the percentage of z with respect to the sum of w, x, y, and z in formula (1) is 0%.

8. The side chain type alkyl-modified silicone resin according to any one of claims 1 to 7, wherein the resin has a weight-average molecular weight of from 5,000 to 20,000.

9. A resin composite material comprising the side chain type alkyl-modified silicone resin according to any one of claims 1 to 8 and an insulating thermally conductive filler.
